# EUROPEAN PATENT SPECIFICATION

(11) **EP 2 839 871 B1**
(45) Date of publication and mention of the grant of the patent: **27.04.2016**
(21) Application number: 14170808.1
(22) Date of filing: 02.06.2014
(51) Int. Cl.: B01D 39/16

(54) **SILVER-COATED FABRIC FOR FILTER MEMBRANE INTEGRATION**
SILBER BESCHICHTETES GEWEBE FÜR FILTERMEMBRANINTEGRATION
TISSUE RECOUVERT D'ARGENT POUR INTÉGRATION DE MEMBRANE DE FILTRE

(30) Priority: 31.05.2013 US 201313907264
(43) Date of publication of application: 25.02.2015
(73) Proprietor: Goodrich Corporation, Charlotte, NC 28217 (US)
(72) Inventor: Hu, Jin, Hudson Village, OH 44236 (US)
(74) Representative: Hall, Matthew Benjamin

(56) References cited:
- EP-A1- 1 142 702
- EP-A1- 1 310 288
- US-A1- 2011 297 609

## Description

### BACKGROUND

In an aircraft, a potable water system is generally used to supply cabin outlet facilities (e.g., handwash basins in lavatories and sinks in onboard kitchens) with fresh water. Such a potable water system may use water filter media (e.g., pathogen-retaining filter media) combined with biocide-containing nanofiber fabrics to kill pathogens contained in the water or air (see US patent application US 2011/0297609 A1).

However, when the potable water system uses biocide-containing nanofiber fabrics bound via adhesive layers to the filter media for disinfestation, it has been found that the incorporation of the nanofiber fabrics and the adhesive layers, no matter how thin they are, usually causes a significant drop in the water flow rate and also in the water pressure. Thus, there is a need for the development of a new type of filtration system that can be used in a potable water system in the aviation field. It is desired that such a filtration system offers efficient disinfection effects while achieving a low pressure drop and a high flow rate when in use.

EP 1310288 A1 discloses an antibacterial air filter medium.

### SUMMARY

The invention provides a novel type of filter media that offers efficient disinfection effects, which also achieves a low water pressure drop and a high water flow rate when in use. Specifically, the filter media of the invention includes a microorganism-killing membrane that contains a spunbonded nonwoven polymeric fabric coated with silver and a thermal binding layer.

Advantageously, the filter media of the invention is adhesive free (i.e., containing no adhesive layers or pastes).

Thus, viewed from a first aspect, the invention provides a method of preparing a filter medium, comprising the steps of: thermally binding a first spunbonded nonwoven fabric layer to a first side of a silver-coated spunbonded nonwoven fabric; thermally binding a first side of a second spunbonded nonwoven fabric layer to a second side of the silver-coated spunbonded fabric; thermally binding a first side of a pathogen-retaining filter layer to a second side of the second spunbonded nonwoven fabric; thermally binding a first side of a third spunbonded nonwoven fabric layer to a second side of the pathogen-retaining filter layer; wherein said silver-coated spunbonded nonwoven fabrics are prepared through depositing a silver film onto spunbonded nonwoven fabrics.

Viewed from a second aspect, the invention provides filter media wherein a first spunbonded nonwoven fabric layer has been thermally bonded to a first side of a silver-coated spunbonded nonwoven fabric layer; a second spunbonded nonwoven fabric layer has been thermally bonded to a second side of the silver-coated spunbonded fabric layer to provide a microorganism-killing membrane; a first side of a pathogen-retaining filter layer has been bonded to a second side of the second spunbonded nonwoven fabric layer; a third spunbonded nonwoven fabric layer has been thermally bonded to a second side of the pathogen-retaining filter layer; and wherein said filter media does not contain an adhesive layer.

The filter media, by virtue of the spunbonded nonwoven fabric layers thermally binding the layers of the filter media together, does not contain an adhesive layer.

In one embodiment, the spunbonded nonwoven polymeric fabrics coated with silver can be polyester fabrics, polypropylene fabrics, polyurethane fabrics, polyimide fabrics, or a combination thereof. In certain instances, the spunbonded nonwoven polymeric fabrics are polyester fabrics, such as, Reemay® spunbonded polyester nonwoven fabrics (e.g., Reemay® 2004 and Reemay® 2250, available from Fiberweb Filtration PLC, Old Hickory, TN)

In another embodiment, the thermal binding layer employed herein can be composed of spunbonded nonwoven polymeric fabrics, such as, polyester fabrics, polypropylene fabrics, polyurethane fabrics, polyimide fabrics, or a combination thereof. In certain instances, the spunbonded nonwoven polymeric fabrics are polyester fabrics, such as, Reemay® spunbonded polyester nonwoven fabrics (e.g., Reemay® 2004 and Reemay® 2250, available from Fiberweb Filtration PLC, Old Hickory, TN).

In certain embodiments, the silver film can be deposited onto the spunbonded nonwoven fabrics through a chemical vapor deposition, a physical vapor deposition, or a sol gel deposition, or a combination thereof. Chemical vapor deposition includes, but is not limited to, a vacuum vapor deposition, and a combustion chemical vapor deposition.

Another aspect of the invention provides a water-purification cartridge that contains the filter media of the invention.

The invention also features a potable water system containing the water-purification cartridge of the invention.

When in use, the filter media according to the invention offers advantages, such as, maintaining a high water flow rate and a low water pressure drop. The filter media of the invention is also highly efficient in achieving good disinfection effects. Thus, the filter media of the invention can be used as an add-on component to dirt/chemical filter cartridges currently used in aircraft potable water systems to meet the requirements of disinfection without slowing down water flow rate and increasing water pressure drop.

### BRIEF DESCRIPTION OF THE DRAWINGS

Certain preferred embodiments of the invention will now be described in greater detail by way of example only and with reference to the accompanying drawings, in which:
FIG. 1 shows a process of producing a silver coated Reemay® ("SR") film by depositing a thin silver coating onto a Reemay® layer ("R");
FIG. 2 demonstrates a process of making a SR/R/P membrane by thermally laminating a SR film onto a pathogen-retaining media ("P") *via* a separate thermal binding layer of Reemay^{®} fabric: the resulting assembly (SR/R/P) is capped from both sides with Reemay^{®} layers for protection;
FIG. 3 demonstrates a process of making a SR/P membrane by thermally laminating a SR film onto a pathogen-retaining media *without* a separate thermal binding layer of Reemay^{®} fabric: the resulting assembly (SR/P) is capped from both sides with Reemay^{®} layers for protection;
FIG. 4 shows a process of producing a D/R/SR/R/P membrane by thermally binding a SR/R/P film onto a dirt/chemical holding filter *via* a separate thermal binding layer of Reemay^{®} fabric: the resulting assembly (D/R/SR/R/P) is capped from both sides with Reemay^{®} layers for protection;
FIG. 5 shows a process of producing a D/SR/P membrane by thermally binding a SR/P film onto a dirt/chemical holding filter ("D") *without* a separate thermal binding layers of Reemay^{®} fabric: the resulting assembly (D/SR/P) is capped from both sides with Reemay^{®} layers for protection;
FIG. 6 shows a process of producing a SR/R/SR membrane by thermally binding two SR film *via* a separate thermal binding layer of Reemay^{®} fabric: the resulting assembly (SR/R/SR) is capped from both sides with Reemay^{®} layers for protection;
FIG. 7 shows a structure having multiple rolls of biocidal fabrics incorporated inward of a dirt/chemical retaining filter cartridge; and
FIG. 8 shows a structure having multiple-turn rolls of biocidal fabrics incorporated outward of a dirt/chemical retaining filter cartridge.

### DETAILED DESCRIPTION

The invention provides a novel method of preparing a filter media, according to claim 1.

In one embodiment, the silver film can be deposited onto the spunbonded nonwoven fabrics through a chemical vapor deposition, a physical vapor deposition, or a sol gel deposition, or a combination thereof.

Chemical vapor deposition includes methods, such as, traditional vacuum vapor deposition (CVD) and combustion chemical vapor deposition (CCVD) by nGima Company (www.nGimat.com). Physical vapor deposition (PVD) is performed, for example, by magnetron sputtering or electron beam.

In certain embodiments, the chemical vapor deposition used herein is a vacuum vapor deposition or a combustion chemical vapor deposition.

It is contemplated that other biocidal materials can be deposited onto the spunbonded nonwoven fabrics. The resulting biocidal-coated spunbonded nonwoven fabrics can replace the silver-coated spunbonded nonwoven fabrics used herein. The biocidal deposition can be achieved, for example, by a chemical vapor deposition, a physical vapor deposition, or a sol gel deposition, or a combination thereof.

The thickness of the silver coating can be in a nano-range, generally between about 1 nm and 1,000 nm. By coating the spunbonded nonwoven fabrics with a silver film, the use of biocidal nano-particles can be avoided. Accordingly, the invention provides a nano-particles leach-free method.

The utility of the silver coated fabrics as above delineated avoids the use of nanoparticles or biocidal additive chemicals, which require a subsequent leach of nanoparticles or biocidal additive chemicals. Generally, the silver coatings used herein are not soluble. Thus, the possibility of having leaching issues in the process is low.

The invention also provides a method of preparing a filter media comprising thermally binding silver-coated spunbonded nonwoven fabrics to at least one membrane, such as, a dirt-retaining membrane and a chemical-retaining membrane in addition to the pathogen-retaining membrane, or a combination thereof. The silver-coated spunbonded nonwoven fabrics used herein are prepared through depositing a silver film onto spunbonded nonwoven fabrics.

Further, the invention relates to the use of spunbonded nonwoven fabrics that are coated with a silver film (or other biocidal film forming material), which are thermally bound to the pathogen-retaining filter media via a thermal binding layer onto pathogen-retaining filter media, for providing filter media with enhanced pathogen killing efficacy. Alternatively, the invention provides filter media comprising multiple turns of silver-coated spunbonded nonwoven fabrics for providing pathogen killing efficacy.

Accordingly, the invention provides filter media comprising a microorganism-killing membrane. The microorganism-killing membrane includes a thermal binding layer (also referred to as a spunbonded nonwoven fabric) and the silver-coated spunbonded nonwoven fabrics. The filter media does not contain an adhesive layer or adhesive pastes.

Various spunbonded nonwoven polymeric fabrics can be used, including, for example, polyester fabrics, polypropylene fabrics, polyurethane fabrics, polyimide fabrics, or a combination thereof. Other polymers or combinations thereof that have high Fraizer permeability or high TEXTest permeability can also be used (Fraizer Air Permeability Tester or TEXTest tester can be used for standard air permeability test, ASTM D737).

For example, the spunbonded nonwoven polymeric fabrics for use in the thermal binding layer can be polyester fabrics. Exemplified spunbonded nonwoven polymeric fabrics that are used in the invention include, for example, Reemay^{®} spunbonded polyester fabrics.

Reemay^{®} spunbonded polyester can be obtained as a sheet structure of continuous filament polyester fibers that are randomly arranged, highly dispersed, and bonded at the filament junctions. The chemical and thermal properties of Reemay^{®} polyester fabrics are essentially those of polyester fiber. The fibers' spunbonded structure offers a combination of physical properties, such as, high tensile and tear strength, non-raveling edges, excellent dimensional stability, no media migration, good chemical resistance, and controlled arrestance and permeability. Reemay^{®} fabrics are used in various industries as covers (e.g., garden blankets) or support materials.

Reemay^{®} spunbonded polyester fabrics include either straight or crimped polyester fibers which give the fabrics different filtration and other general performance properties. It is believed that crimped fibers offer properties of softness, conformability, and greater porosity, while straight fibers yield stiffness, tighter structure, and finer arrestance.

In certain embodiments of the invention, the Reemay^{®} spunbonded polyester fabrics used herein are straight polyester fabrics. Exemplified Reemay^{®} spunbonded polyester fabrics include, for example, Reemay^{®} spunbonded polyester nonwovens 2004 (or "Reemay^{®} 2004"), and Reemay^{®} spunbonded polyester nonwovens 2250 (or "Reemay^{®} 2250"). These Reemay® fabrics are filtration grade spunbonded polyester fabrics: for Reemay^{®} 2004, thickness 5.0 mil, Fraizer 1400 cfm/ft²; for Reemay^{®} 2250, thickness 5.0 mil, Fraizer 1080 cfm/ft².

The filter media of the invention includes pathogen-retaining media. The microorganism-killing membrane is thermally bound to the pathogen-retaining media via the same thermal binding layer or via another thermal binding layer.

In other embodiments of the invention, the filter media includes dirt/chemical holding filter media, and optionally one or more additional thermal binding layers. The microorganism-killing membrane is thermally bound via the thermal binding layers to both the pathogen-retaining medium and the dirt/chemical holding filter media via different surfaces.

As known in the art, adhesives block some pores of media and biocide sites, further causing reduced flow rate and high pressure drops in a filtration system. By using thin Reemay^{®} fabrics as binders in the filter media, the use of chemical adhesives can be eliminated. Further, the use of Reemay^{®} fabrics also makes it possible to fabricate the fabrics contained in the filter media.

Accordingly, in at least a preferred embodiment of the invention, a microorganism-killing membrane that contains silver-coated fabrics (such as, silver coated Reemay^{®} fabrics) can be rolled up by multiple turns on a screen roll, which is then placed inward of a dirt/chemical holding filter media (or cartridge). Alternatively, the microorganism-killing membrane of the invention can be rolled up and placed outside of the dirt/chemical holding filter media (or cartridge). The specific design of the roll-up forms depends upon the water-flow direction in a specific water system.

Further, rolled-up silver-coated fabrics may contain multiple microorganism-killing membranes of the invention. The rolled-up biocide-containing fabrics can be placed inward of a dirt/chemical holding filter media (or cartridge), or outside of the dirt/chemical holding filter media (or cartridge), depending on the water-flow direction.

At least a preferred embodiment of the invention further features a water-purification cartridge containing the filter media of the invention.

Also provided is a potable water system containing the water-purification cartridge. Generally, a potable water system includes components, such as, a water storage tank, a pump, a supply line, a water-purification device (such as, a water-purification cartridge). For a detailed description on potable water systems and functions thereof, see US 2011/0297609.

A variety of configurations according to preferred embodiments of the invention are presented in the drawings. In these drawings, Reemay^{®} 2250 is provided as an example of spunbonded nonwoven polymeric fabrics that are used for a thermal binding layer (a thermal binder). The invention covers the use of other types of spunbonded nonwoven polymeric fabrics as silver-coated fabrics and a thermal binding layer and the use of other types of biocides.

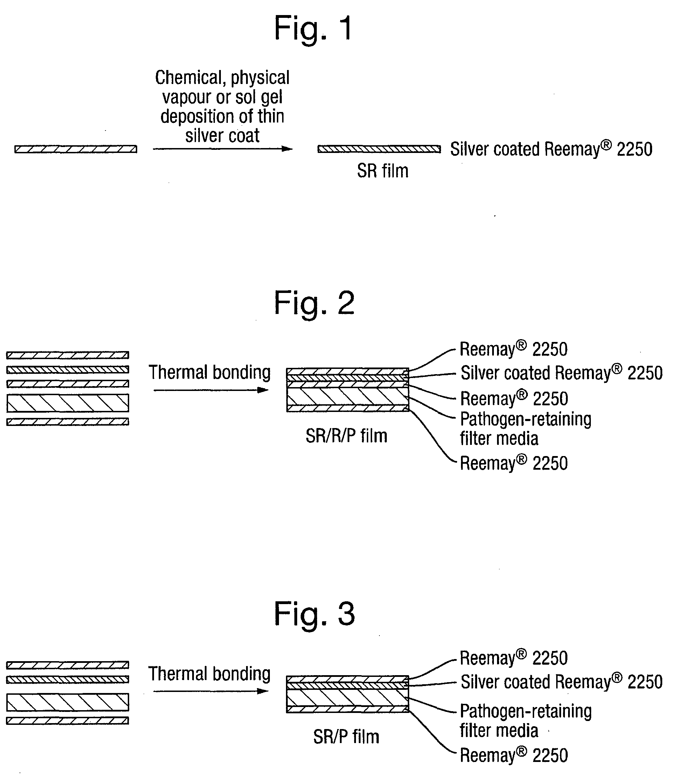

FIG. 1 schematically shows that a spunbonded nonwoven polymeric fabric (Reemay^{®}; R) can be coated with a thin silver film on one or both sides *via* combustion chemical vapor deposition (CCVD). The resulting silver-coated fabric is designated as a SR film.

In a CCVD process, silver precursor compounds are added to a burning gas. Flame is moved closely above the surface to be coated. The high energy within the flame converts the precursor compounds into silver particles, which readily interact with the fabric, forming a firmly adhering silver deposit. The resulting micro-/nano-structure and thickness of the deposited silver layer can be controlled by varying process parameters, such as, speed of substrate or flame, number of passes, substrate temperature, and distance between flame and substrate.

FIG. 2 schematically shows the use of Reemay^{®} 2250 (R) by thermal bonding to form a filter membrane of silver coated Reemay^{®} (SR) bonded with a Reemay^{®} layer (R) to a pathogen-retaining filter resin (P) further using Reemay^{®} fabric as the outermost layers of the filter membrane. The SR layer can readily kill pathogens retained on the pathogen retaining media to prevent biofouling.

As used herein, biofouling (or "biological fouling") means accumulation of microorganisms on surfaces or pores of the filter media.

Figures 3, 5 and 6 show examples of filter media that are outside the present claims but may feature in a divisional.

FIG. 3 schematically shows the use of Reemay^{®} 2250 (R) by thermal bonding to form a filter membrane of silver coated Reemay^{®} (SR) bonded without a Reemay^{®} layer (R) to a pathogen-retaining filter resin (P) further using Reemay^{®} fabric to the outermost layers of the filter membrane. The SR layer can also readily kill pathogens retained on the pathogen retaining media to prevent biofouling.

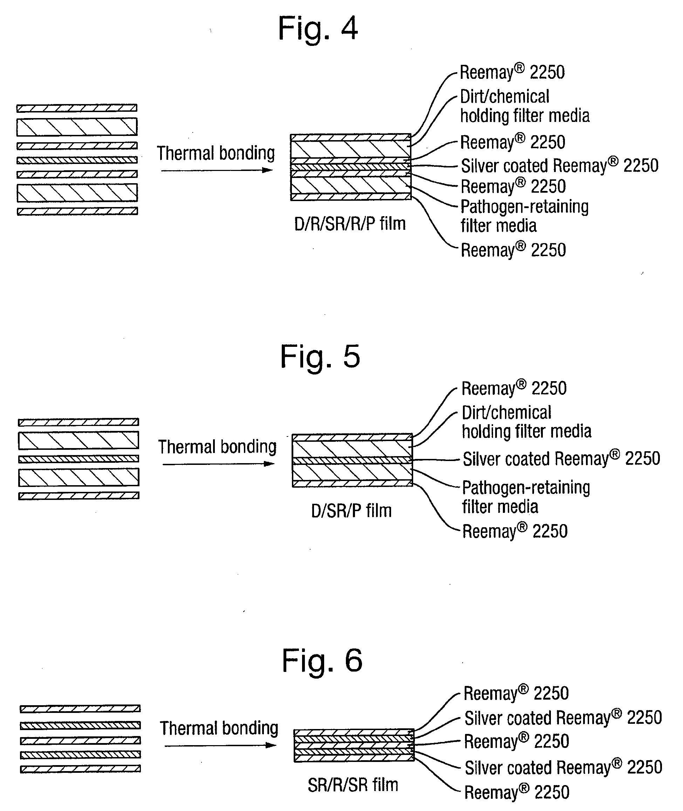

FIG. 4 schematically shows that a SR/R/P assembly can be thermally laminated to a dirt/chemical-holding filter media *via* Reemay^{®} fabrics. The dirt/chemical filter can be NanoCeram-PAC^{™} media or other carbon filters. The resulting assembly is designated as a D/R/SR/R/P filter membrane. Use of the dirt/chemical-holding filter prevents SR/R/P layers from prematurely losing disinfection properties due to surface blockage by dirt and/or chemicals.

FIG. 5 schematically shows that a SR/P assembly can be thermally laminated to a dirt/chemical-holding filter media *without* Reemay^{®} fabrics. The dirt/chemical filter can be NanoCeram-PAC^{™} media or other carbon filters. The resulting assembly is designated as a D/SR/P filter membrane. Use of the dirt/chemical-holding filter prevents SR/P layers from prematurely losing disinfection properties due to surface blockage by dirt and/or chemicals.

FIG. 6 shows that two SR films can be thermally laminated together *via* Reemay^{®} fabrics. The resulting assemble is designated as a SR/R/SR film. More than two SR films can be thermally laminated if a better disinfection and filtration performance is needed.

The two thermal lamination steps can be performed concurrently or sequentially. In one example, the SR film is laminated at the same time *via* Reemay^{®} 2250 layers onto pathogen-retaining media and onto dirt/chemical holding filter media from different sides. In another example, the SR film is first laminated *via* a Reemay^{®} 2250 layer onto pathogen-retaining media, and then onto dirt/chemical holding filter media *via* another Reemay^{®} 2250 layer. Alternatively, the SR film is laminated *via* a Reemay^{®} 2250 layer onto dirt/chemical holding filter media prior to its lamination to pathogen-retaining media *via* another Reemay^{®} 2250 layer.

As well understood by an ordinarily skilled artisan, the Reemay^{®} 2250 layer used for laminating a biocidal film can be the Reemay^{®} ("R") layer (if included in the biocidal film) or a separate Reemay^{®} layer.

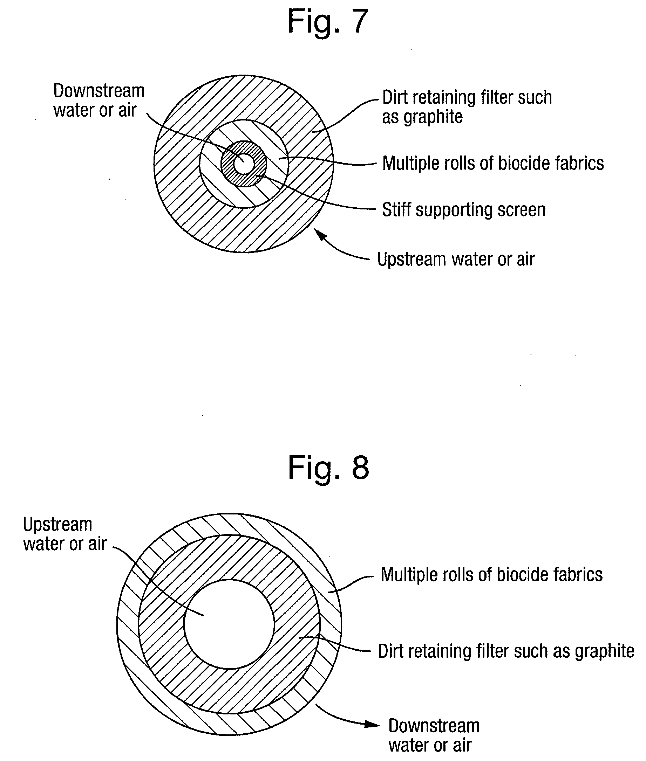

FIG. 7 schematically shows that biocidal fabrics are rolled on a stiff screen roll multiple turns for providing an enhanced pathogen killing efficiency. The biocidal fabrics that can be used herein include, but are not limited to, a SR film.

In certain instances, the biocidal fabrics are composed of thin Reemay^{®} fabrics, so that the total thickness of multiple layers of the biocidal fabrics is still thin, generally between about 10 mil and 30 mil. The use of such a rolled-up structure does not cause a reduced water flow rate or a significant drop in water pressure. In this drawing, the water flow direction is outward from the center of the filter media ring.

FIG. 8 is similar to FIG. 7. In this case, the biocidal fabrics are rolled on the dirt and chemical retaining filter ring. The water flow direct direction is inward toward the center. Likewise, the biocidal fabrics used herein include, for example, a SR film.

Further, the Reemay^{®} 2250 fabrics can be thermally bound to a membrane or other Reemay^{®} fabrics at a relative low temperature, e.g. about 100° to 130 °C with an appropriate pressure. It is appreciated that at such a low temperature, most fabrics or media will not be thermally damaged.

Also disclosed is a method of coating spunbonded nonwoven polymeric fabrics with a thin biocidal coating. The method includes a step of depositing a biocidal material (e.g., a silver film) onto the spunbonded nonwoven polymeric fabrics, resulting in silver-coated spunbonded nonwoven polymeric fabrics with pores essentially free of blockage of the deposited silver film.

As discussed above, the use of silver-coated spunbonded nonwoven polymeric fabrics avoids use of nano-silver particles. Such use of silver-coated fabrics eliminates concerns of silver particle leaching and decreased disinfection efficiency due to larger silver surfaces.

In at least a preferred embodiment, the invention further relates to the use of silver-coated spunbonded nonwoven polymeric fabrics, which are bound to a thermal binding layer to provide pathogen killing efficacy. By using spunbonded nonwoven polymeric fabrics, a high water flow rate and low water pressure drop can be achieved.

Although the application focuses on a potable water filtration system, it is believed that the filter media of the invention works equally well for an air filtration system or other types of fluid filtration systems.

Accordingly, the invention provides more efficient disinfection filter media for fluid filtration, which offers desired properties, such as, a low pressure drop and a high flow rate when in use. Specifically, thin spunbonded nonwoven polymeric fabrics of the invention are coated with a biocidal material, which is then thermally bound via a thermal binder onto pathogen-retaining filter media, to provide an enhanced pathogen killing efficacy. Alternatively, filter media containing multiple-rolls of biocidal fabrics also provide good pathogen killing properties.

Still further, the invention relates to a method of preparing filter media for use in a potable water system or an air filtration system. The method comprises thermally binding silver-coated spunbonded nonwoven polymeric fabrics with a thermal binding layer, and further with pathogen-retaining media. The thermal binding step can be conducted through processes, such as, hot calendaring, belt calendaring, through-air thermal bonding, ultrasonic bonding, radiant-heat bonding, hot laminators, vacuum bagging with heat, and autoclave with pressure and heat, or a combination thereof. Specifically, the thermal binding step of the invention is designed to avoid or minimize melting fibers contained in the silver-coated fabrics and/or the thermal binding layer.

For example, the autoclave method can be performed by a process comprising the following steps: 1). Lay up fabrics and membranes; 2). Bag the fabrics and membranes on a flat metal support; 3). Vacuum the bag; 4). Place the assembly in an autoclave; 5). Apply pressure and heat for a period of time; 6). Cool the assembly down to ambient temperature and release vacuum; and 7). Check to ensure that thermal bonding is completed.

## Claims

1. A method of preparing a filter medium, comprising the steps of:
thermally binding a first spunbonded nonwoven fabric layer to a first side of a silver-coated spunbonded nonwoven fabric;
thermally binding a first side of a second spunbonded nonwoven fabric layer to a second side of the silver-coated spunbonded fabric;
thermally binding a first side of a pathogen-retaining filter layer to a second side of the second spunbonded nonwoven fabric;
thermally binding a first side of a third spunbonded nonwoven fabric layer to a second side of the pathogen-retaining filter layer;
wherein said silver-coated spunbonded nonwoven fabrics are prepared through depositing a silver film onto spunbonded nonwoven fabrics.

2. The method of claim 1, wherein the spunbonded nonwoven fabrics are selected from the group of polyester fabrics, polypropylene fabrics, polyurethane fabrics, polyimide fabrics, or a combination thereof.

3. The method of claim 1 or 2, wherein the silver film is deposited through a chemical vapor deposition, a physical vapor deposition, or a sol gel deposition, or a combination thereof.

4. The method of claim 3, wherein said chemical vapor deposition is a vacuum vapor deposition or a combustion chemical vapor deposition.

5. Filter media wherein a first spunbonded nonwoven fabric layer has been thermally bonded to a first side of a silver-coated spunbonded nonwoven fabric layer;
a second spunbonded nonwoven fabric layer has been thermally bonded to a second side of the silver-coated spunbonded fabric layer to provide a microorganism-killing membrane;
a first side of a pathogen-retaining filter layer has been bonded to a second side of the second spunbonded nonwoven fabric layer;
a third spunbonded nonwoven fabric layer has been thermally bonded to a second side of the pathogen-retaining filter layer; and
wherein said filter media does not contain an adhesive layer.

6. The filter media of claim 5, wherein the spunbonded nonwoven polymeric fabrics are selected from the group of polyester fabrics, polypropylene fabrics, polyurethane fabrics, polyimide fabrics, or a combination thereof, further preferably wherein the spunbonded nonwoven polymeric fabrics comprise Reemay^{®} spunbonded polyester nonwoven fabrics.

7. The filter media of claim 6, wherein the silver-coated spunbonded nonwoven polymeric fabric is selected from the group of polyester fabrics, polypropylene fabrics, polyurethane fabrics, polyimide fabrics, or a combination thereof, preferably wherein the spunbonded nonwoven polymeric fabric coated with silver comprises Reemay^{®} spunbonded polyester nonwoven fabrics.

8. The filter media of any one of claims 5 to 7, wherein said filter media further comprises at least one additional membrane selected from dirt holding filter media and chemical holding filter media.

9. The filter media of claim 5 to 8, wherein said filter media comprises dirt/chemical holding filter media and one or more additional thermal binding layers, and the microorganism-killing membrane, via said additional thermal binding layer(s), is bound to the dirt/chemical holding filter media at a surface different from the surface used for binding with the pathogen-retaining medium.

10. The filter media of any one of claims 5 to 9, wherein the microorganism-killing membrane is in a multiple-turn rolled-up form, and said filter media further comprises dirt/chemical holding filter media.

11. The filter media of claim 10, wherein the rolled-up microorganism-killing membrane is placed inward of the dirt/chemical holding filter media, or wherein the rolled-up microorganism-killing membrane is outside of the dirt/chemical holding filter media.

12. A water purification cartridge comprising the filter media of claim 5.

13. A water purification system for generating potable water comprising the water purification cartridge of claim 12.

## Patentansprüche

1. Verfahren zur Herstellung eines Filtermediums, umfassend die folgenden Schritte:
thermische Bindung einer ersten Spinnvliesgewebeschicht an eine erste Seite eines silberbeschichteten Spinnvliesgewebes;
thermische Bindung einer ersten Seite einer zweiten Spinnvliesgewebeschicht an eine zweite Seite des silberbeschichteten Spinnvliesgewebes;
thermische Bindung einer ersten Seite einer Erreger beibehaltenden Filterschicht an eine zweite Seite des zweiten Spinnvliesgewebes;
thermische Bindung einer ersten Seite einer dritten Spinnvliesgewebeschicht an eine zweite Seite der Erreger beibehaltenden Filterschicht;
wobei die silberbeschichteten Spinnvliesgewebe durch Ablage eines Silberfilms auf den Spinnvliesgeweben hergestellt werden.

2. Verfahren nach Anspruch 1, wobei die Spinnvliesgewebe ausgewählt sind aus der Gruppe bestehend aus Polyestergeweben, Polypropylengeweben, Polyurethangeweben, Polyimidgeweben oder einer Kombination davon.

3. Verfahren nach Anspruch 1 oder 2, wobei der Silberfilm durch eine chemische Aufdampfung, eine physikalische Aufdampfung oder eine Sol-Gel-Ablage oder eine Kombination davon abgelegt wird.

4. Verfahren nach Anspruch 3, wobei es sich bei der chemischen Aufdampfung um eine Vakuumaufdampfung oder eine chemische Verbrennungsaufdampfung handelt.

5. Filtermedien, wobei eine erste Spinnvliesgewebeschicht thermisch an eine erste Seite einer silberbeschichteten Spinnvliesgewebeschicht gebunden wurde;
eine zweite Spinnvliesgewebeschicht thermisch an eine zweite Seite der silberbeschichteten Spinnvliesgewebeschicht gebunden wurde, um eine Mikroorganismus abtötende Membran bereitzustellen;
eine erste Seite einer Erreger beibehaltenden Filterschicht an eine zweite Seite der zweiten Spinnvliesgewebeschicht gebunden wurde;
eine dritte Spinnvliesgewebeschicht thermisch an eine zweite Seite der Erreger beibehaltenden Filterschicht gebunden wurde; und
wobei die Filtermedien keine Klebschicht enthalten.

6. Filtermedien nach Anspruch 5, wobei die Spinnvlies-Polymergewebe ausgewählt sind aus der Gruppe bestehend aus Polyestergeweben, Polypropylengeweben, Polyurethangeweben, Polyimidgeweben oder einer Kombination davon, ferner wobei die Spinnvlies-Polymergewebe bevorzugt Reemay^{®}- Spinnvlies-Polyestergewebe umfassen.

7. Filtermedien nach Anspruch 6, wobei das silberbeschichtete Spinnvlies-Polymergewebe ausgewählt ist aus der Gruppe bestehend aus Polyestergeweben, Polypropylengeweben, Polyurethangeweben, Polyimidgeweben oder einer Kombination davon, wobei das mit Silber beschichtete Spinnvlies-Polymergewebe bevorzugt Reemay^{®}-Spinnvlies-Polyestergewebe umfasst.

8. Filtermedien nach einem der Ansprüche 5 bis 7, wobei die Filtermedien ferner wenigstens eine zusätzliche Membran umfassen, die ausgewählt ist aus Schmutz haltenden Filtermedien und Chemikalien haltenden Filtermedien.

9. Filtermedien nach Anspruch 5 bis 8, wobei die Filtermedien Schmutz-/Chemikalien haltende Filtermedien sowie eine oder mehrere zusätzliche thermisch bindende Schichten umfassen und die Mikroorganismus abtötende Membran über die zusätzliche(n) thermisch bindende(n) Schicht(en) an die Schmutz-/Chemikalien haltenden Filtermedien an einer Oberfläche gebunden ist, die sich von der Oberfläche unterscheidet, die für die Bindung an das Erreger beibehaltende Medium verwendet wird.

10. Filtermedien nach einem der Ansprüche 5 bis 9, wobei die Mikroorganismus abtötende Membran in mehrfach gedrehter, aufgerollter Form besteht und die Filtermedien ferner Schmutz-/Chemikalien haltende Filtermedien umfassen.

11. Filtermedien nach Anspruch 10, wobei die aufgerollte Mikroorganismus abtötende Membran von den Schmutz-/Chemikalien haltenden Filtermedien aus nach Innen platziert wird oder wobei sich die aufgerollte Mikroorganismus abtötende Membran außerhalb der Schmutz-/Chemikalien haltenden Filtermedien befindet.

12. Wasseraufbereitungspatrone, umfassend die Filtermedien von Anspruch 5.

13. Wasseraufbereitungssystem zum Erzeugen von Trinkwasser, umfassend die Wasseraufbereitungspatrone von Anspruch 12.

## Revendications

1. Procédé de préparation d'une matière filtrante, comprenant les étapes consistant à :
lier thermiquement une première couche de tissu non tissé filé-lié à un premier côté d'un tissu non tissé filé-lié enduit d'argent ;
lier thermiquement un premier côté d'une deuxième couche de tissu non tissé filé-lié à un second côté du tissu filé-lié enduit d'argent ;
lier thermiquement un premier côté d'une couche filtrante rétentrice d'agents pathogènes à un second côté du second tissu non tissé filé-lié ;
lier thermiquement un premier côté d'une troisième couche de tissu non tissé filé-lié à un second côté de la couche filtrante rétentrice d'agents pathogènes ;
dans lequel lesdits tissus non tissés filés-liés enduits d'argent sont préparés au moyen d'un dépôt d'un film d'argent sur des tissus non tissés filés-liés.

2. Procédé selon la revendication 1, dans lequel les tissus non tissés filés-liés sont choisis dans le groupe constitué par des tissus en polyester, des tissus en polypropylène, des tissus en polyuréthane, des tissus en polyimide, ou une combinaison de ceux-ci.

3. Procédé selon la revendication 1 ou 2, dans lequel le film d' argent est déposé au moyen d'un dépôt chimique en phase vapeur, d'un dépôt physique en phase vapeur, ou d'un dépôt sol-gel, ou d'une combinaison de ceux-ci.

4. Procédé selon la revendication 3, dans lequel ledit dépôt chimique en phase vapeur est un dépôt en phase vapeur par évaporation sous vide ou un dépôt chimique en phase vapeur par combustion.

5. Matière filtrante dans laquelle une première couche de tissu non tissé filé-lié a été liée thermiquement à un premier côté d'une couche de tissu non tissé filé-lié enduit d'argent ;
une deuxième couche de tissu non tissé filé-lié a été liée thermiquement à un second côté de la couche de tissu non tissé filé-lié enduit d'argent de manière à fournir une membrane tueuse de micro-organismes ;
un premier côté d'une couche filtrante rétentrice d'agents pathogènes a été lié à un second côté de la deuxième couche de tissu non tissé filé-lié ;
une troisième couche de tissu non tissé filé-lié a été liée thermiquement à un second côté de la couche filtrante rétentrice d'agents pathogènes ; et
dans laquelle ladite matière filtrante ne contient pas de couche adhésive.

6. Matière filtrante selon la revendication 5, dans laquelle les tissus non tissés filés-liés polymères sont choisis dans le groupe constitué par des tissus en polyester, des tissus en polypropylène, des tissus en polyuréthane, des tissus en polyimide, ou une combinaison de ceux-ci, en outre de préférence dans laquelle les tissus non tissés filés-liés polymères comprennent des tissus non tissés filés-liés en polyester Reemay^{®}.

7. Matière filtrante selon la revendication 6, dans laquelle le tissu non tissé filé-lié polymère enduit d'argent est choisi dans le groupe constitué par des tissus en polyester, des tissus en polypropylène, des tissus en polyuréthane, des tissus en polyimide, ou une combinaison de ceux-ci, de préférence dans laquelle le tissu non tissé filé-lié polymère enduit d'argent comprend des tissus non tissés filés-liés en polyester Reemay^{®}.

8. Matière filtrante selon l'une quelconque des revendications 5 à 7, dans laquelle ladite matière filtrante comprend en outre au moins une membrane supplémentaire choisie parmi une matière filtrante de retenue d'impuretés et une matière filtrante de retenue de substances chimiques.

9. Matière filtrante selon l'une quelconque des revendications 5 à 8, dans laquelle ladite matière filtrante comprend une matière filtrante de retenue d'impuretés/de retenue de substances chimiques et une ou plusieurs couche(s) de liaison thermique supplémentaire(s), et la membrane tueuse de micro-organismes, par l'intermédiaire de ladite ou desdites couche(s) de liaison thermique supplémentaire(s), est liée à la matière filtrante de retenue d'impuretés/de retenue de substances chimiques au niveau d'une surface qui est différente de la surface qui est utilisée pour être liée avec la couche filtrante rétentrice d'agents pathogènes.

10. Matière filtrante selon l'une quelconque des revendications 5 à 9, dans laquelle la membrane tueuse de micro-organismes se présente sous une forme enroulée à spires multiples, et ladite matière filtrante comprend en outre la matière filtrante de retenue d'impuretés/de retenue de substances chimiques.

11. Matière filtrante selon la revendication 10, dans laquelle la membrane tueuse de micro-organismes enroulée est placée à l'intérieur de la matière filtrante de retenue d'impuretés/de retenue de substances chimiques, ou dans laquelle la membrane tueuse de micro-organismes enroulée se trouve à l'extérieur de la matière filtrante de retenue d'impuretés/de retenue de substances chimiques.

12. Cartouche de purification de l'eau comprenant la matière filtrante selon la revendication 5.

13. Système de purification de l'eau destiné à générer de l'eau potable comprenant la cartouche de purification de l'eau selon la revendication 12.
